(19) Europäisches Patentamt
European Patent Office
Office européen des brevets

(11) **EP 1 630 582 B1**

(12) **EUROPEAN PATENT SPECIFICATION**

(45) Date of publication and mention
of the grant of the patent:
**04.07.2007  Bulletin 2007/27**

(51) Int Cl.:
***G02B 7/10*** *(2006.01)*

(21) Application number: **05018108.0**

(22) Date of filing: **19.08.2005**

(54) **Optical zoom apparatus and portable communication apparatus using the same**

Optisches Zoomobjektiv und tragbare Kommunikationsvorrichtung mit diesem Objektiv

Zoom optique et dispositif de communication portable le comprenant

(84) Designated Contracting States:
**DE FR GB**

(30) Priority:  **23.08.2004  KR 2004066293**

(43) Date of publication of application:
**01.03.2006  Bulletin 2006/09**

(73) Proprietor: **SAMSUNG ELECTRONICS CO., LTD.**
**Suwon-si,**
**Gyeonggi-do (KR)**

(72) Inventors:
• **Shin, Doo-Sik**
**Samsung Electronics Co., Ltd.**
**Suwon-si**
**Gyeonggi-do (KR)**
• **Yoon, Young-Kwon**
**Samsung Electronics Co., Ltd.**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**WO-A-20/04036281**

• **PATENT ABSTRACTS OF JAPAN vol. 2003, no. 08, 6 August 2003 (2003-08-06) & JP 2003 098443 A (OLYMPUS OPTICAL CO LTD), 3 April 2003 (2003-04-03)**
• **PATENT ABSTRACTS OF JAPAN vol. 016, no. 237 (P-1362), 29 May 1992 (1992-05-29) & JP 04 050907 A (NIHON MINI MOOTAA KK), 19 February 1992 (1992-02-19)**
• **PATENT ABSTRACTS OF JAPAN vol. 009, no. 064 (P-343), 23 March 1985 (1985-03-23) & JP 59 198409 A (KONISHIROKU SHASHIN KOGYO KK), 10 November 1984 (1984-11-10)**
• **PATENT ABSTRACTS OF JAPAN vol. 012, no. 429 (P-785), 14 November 1988 (1988-11-14) & JP 63 163311 A (TOSHIBA CORP; others: 01), 6 July 1988 (1988-07-06)**
• **PATENT ABSTRACTS OF JAPAN vol. 2003, no. 11, 5 November 2003 (2003-11-05) & JP 2003 207708 A (SHICOH ENG CO LTD), 25 July 2003 (2003-07-25)**

## Description

This application claims priority to an application entitled "Optical Zoom Apparatus and Portable Communication Apparatus Using the Same," filed with the Korean Intellectual Property Office on August 23, 2004 and assigned Serial No. 2004-66293, the contents of which are hereby incorporated by reference.

## BACKGROUND OF THE INVENTION

### 1. Field of the Invention

The present invention relates to a portable communication apparatus, and more particularly to a portable communication apparatus which is particularly compact or slim even when an optical zoom camera lens module is mounted on the body.

### 2. Description of the Related Art

In general, a "portable communication apparatus" refers to an electronic apparatus that a user can carry with him to perform wireless communication. In consideration of portability, designs of such portable communication apparatuses have tended not only toward compactness, slimness, and lightness, but also toward multimedia availability, having a wider variety of functions. Future portable communication apparatuses are expected to incorporate greater multi-functionality and multi-purpose utilization, as well as greater compactness and lightness. They will also be modified for various multimedia environments or Internet environments. Additionally, such portable communication apparatuses are now commonly used by people of all ages and all walks of life throughout the world. Moreover, they are recognized by some people as a nearly indispensable commodity which must always be carried with one.

Conventional portable communication apparatuses may be classified into various types according to their appearance, such as bar-type portable communication apparatuses, flip-type portable communication apparatuses, and folder-type portable communication apparatuses. The bar-type portable communication apparatuses have a single housing shaped like a bar. The flip-type portable communication apparatuses have a flip which is rotatably connected to a bar-shaped housing by a hinge device. The folder-type portable communication apparatuses have a folder coupled to a single bar-shaped housing by a hinge device in such a manner that the folder can be rotated in order to be folded to or unfolded from the housing.

Additionally, portable communication apparatuses may be classified into rotation-type communication apparatuses and sliding-type communication apparatuses according to the way they open and close. In the rotation-type communication apparatuses, two housings are connected to each other in such a manner that one housing rotates when opened or closed relative to the other while they face each other. In the sliding-type communication apparatuses, two housings are connected to each other in such a manner that one housing slides along a longitudinal direction when opened or closed relative to the other. These variously classified portable communication apparatuses are well known to those skilled in the art.

Meanwhile, conventional portable communication apparatuses now tend to transmit data at a high speed in addition to the basic function of performing voice communication. In other words, according to the increase of demand by consumers, portable communication apparatuses now tend to provide a service, using a wireless communication technology, capable of transmitting data at a high speed.

Additionally, conventional portable communication apparatuses are now equipped with a camera lens to transmit video signals. Portable communication apparatuses generally have an external or embedded camera lens module to perform video communication or to take pictures of a desired object. Portable communication apparatuses that have an optical zoom camera lens module have also been proposed.

When an optical zoom apparatus is applied to an optical zoom camera lens module, a mechanical structure such as a stepping motor or an apparatus using a piezoelectric phenomenon has been proposed. An example of a mechanical optical zoom apparatus using a stepping motor is disclosed in detail in US Patent No. 6,762,888 to Ohima et al., entitled "Control system of zoom lens for digital still cameras" (the contents of which are hereby incorporated by reference).

Portable communication apparatuses are electronic apparatuses driven by electrically charged batteries and are carried by individuals. Accordingly, power consumption, volume, and convenience are considered as important factors.

However, when conventional optical zoom apparatuses are mounted on the body of portable wireless terminals, the body must have at least a predetermined thickness. Specifically, when the body is provided with a camera lens module using an optical zoom principle, the optical zoom distance of the camera lens must be considered when determining the thickness of the body. This adversely affects the compactness and slimness of portable communication apparatuses.

Furthermore, optical zoom apparatuses that use stepping motors unavoidably have noise and vibration and are unsuitable for slimness. In an effort to solve the above problems, an optical zoom apparatus using a piezoelectric phenomenon has been proposed. However, such an optical zoom apparatus has the problem of unstable zoom operation and increased power consumption.

The following documents are relevant in relation to the present invention JP 2003 098443 A discloses an optical device comprising an optical element in the form of a transparent magnetic body, which is moved in front by applying electric current to two cylindrical electromagnets positioned in front of and behind the optical element. The adjusting mechanism for a camera lens disclosed in JP 04 050907 A has a focusing mechanism comprising a movable magnet fixed to a movable part, which can be moved in a lens barrel by changing the voltage of two fixed electromagnetic coils. In JP 59 198409 A the electromagnet with variable current is fixed to a lens, which is made to move between two fixed permanent magnets. JP 63 163311 A discloses a configuration in which a magnetized lens housing moves between a fixed magnet and a fixed solenoid. JP 2003 207708 A discloses the use of C-shaped solenoids in a lens drive.

## SUMMARY OF THE INVENTION

Accordingly, the present invention has been made to reduce or overcome the above-mentioned problems occurring in the prior art and provides additional advantages, by providing an optical zoom apparatus that is slim in size and operates in a stable manner with less power consumption.

In accordance with the principles of the present invention, an optical zoom apparatus is provided comprising a plurality of lenses; a lens housing for retaining the corresponding lenses; a first magnetic body positioned near the lens housing; a second magnetic body positioned near the lens housing along a movement axis while being spaced from the first magnetic body; and a movement means positioned between the first and second magnetic bodies, wherein the first and second magnetic bodies may comprise permanent magnets and solenoids, the movement means comprises a plurality of coil groups to move the lens housing long the movement axis as an electric current is applied, the lens housing has a cylindrical shape with at least one first groove formed on an outer peripheral surface, wherein a third magnetic body is positioned, and a surface of the third magnetic body facing an inner peripheral surface of the first and second magnetic bodies has the same polarity as the inner peripheral surface of the first and second magnetics bodies.

## BRIEF DESCRIPTION OF THE DRAWINGS

The present invention will be more apparent from the following detailed description taken in conjunction with the accompanying drawings, in which:

FIG 1 is a sectional view of an optical zoom apparatus according to a first embodiment of the present invention;
FIG 2 is a perspective view of the optical zoom apparatus shown in FIG 1;
FIG 3 is a top view of a movement means shown in FIG 1;
FIG 4 is a perspective view of a movement means shown in FIG 1;
FIG 5 is a partially enlarged view of a portion of the movement means shown in FIG 3;
FIG 6 is a lateral view of a movement means shown in FIG 1;
FIG 7 is a perspective view of a lens housing shown in FIG 1;
FIG 8 shows a portable communication apparatus comprising an optical zoom apparatus according to a second embodiment of the present invention;
FIG 9 is a sectional view of the optical zoom apparatus shown in FIG 8; and
FIG 10 is a graph illustrating the operation of the optical zoom apparatus shown in FIG 9.

## DETAILED DESCRIPTION

Hereinafter, embodiments of the present invention will be described with reference to the accompanying drawings. For the purposes of clarity and simplicity, a detailed description of known functions and configurations incorporated herein will be omitted as it may make the subject matter of the present invention unclear.

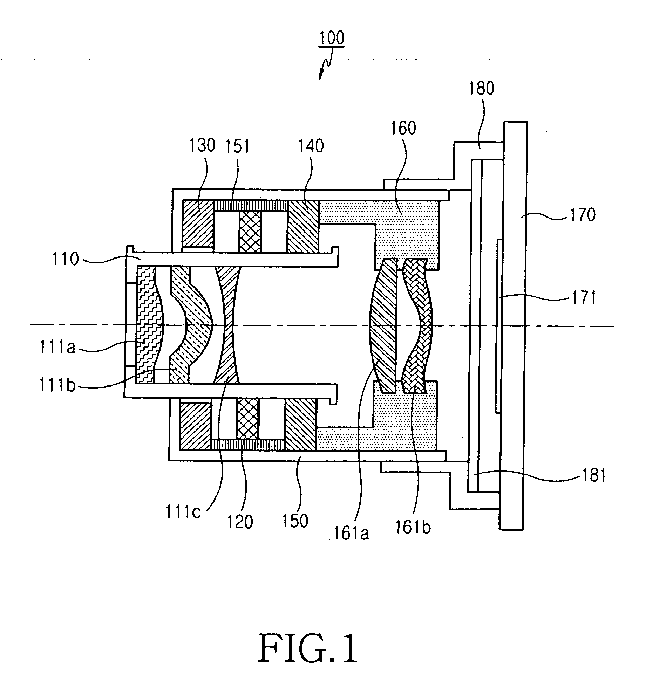

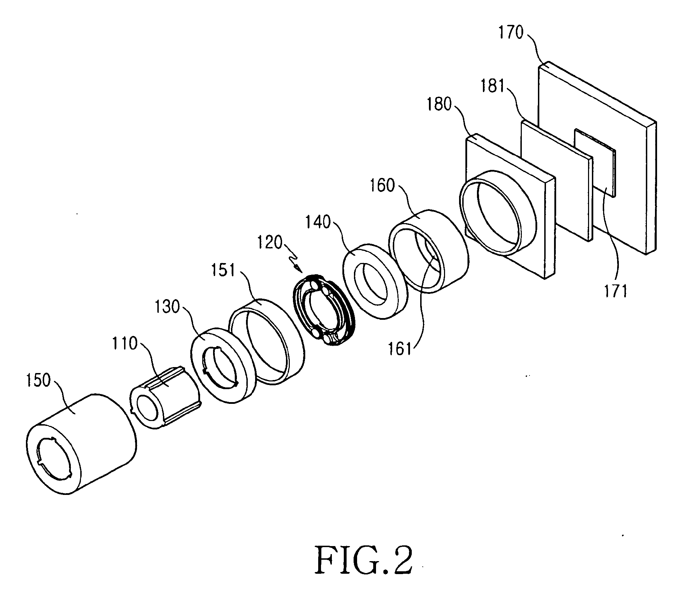

FIG 1 is a sectional view of an optical zoom apparatus according to a first embodiment of the present invention. FIG 2 is a perspective view of the optical zoom apparatus shown in FIG 1. Referring to both FIGs. 1 and 2, an optical zoom apparatus 100 according to a first embodiment of the present invention comprises a plurality of lenses 111a, 111b, 111c, 161a, and 161b; a lens housing 110 for retaining the corresponding lens 111a, 111b, and 111c; a first magnetic body 130; a second magnetic body 140 spaced from the first magnetic body 130; a movement means 120 positioned between the first and second magnetic bodies 130 and 140 while surrounding the lens housing 110 to move the lens housing 110 back and forth along a movement axis as an electric current is applied; an external housing 150; an image sensor 171; a UV filter 181; a circuit board 170; an optical tube 160; and a support member 180.

The image sensor 171 detects optical signals inputted through the lenses 111a,111b, 111c, 161a, and 161b. The UV filter 181 interrupts UV rays of the inputted optical signals. The circuit board 170 converts optical signals into electric signals. The optical tube 160 is mounted in the external housing 150 and retains the lenses 161 a and 161 b which are not retained by the lens housing 110. The support member 180 has an end on which the circuit board 170 is seated and the other end into which the external housing 150 is inserted and retained.

The first and second magnetic bodies 130 and 140 have a radial structure with a hollow formed at the center thereof along the movement axis. The lens housing 110 passes through each hollow of the first and second magnetic bodies 130 and 140 with a predetermined spacing. Surfaces of the first and second magnetic bodies 130 and 140, which face each other, have the same polarity and form a magnetic field between the first and second magnetic bodies 130 and 140. The first and second magnetic bodies 130 and 140 may comprise a permanent magnet or a solenoid.

The external housing 150 has a cylindrical shape with a hollow extending through the center thereof along the movement axis. The first and second magnetic bodies 130 and 140 are supported on the inner peripheral surface of the external housing 150.

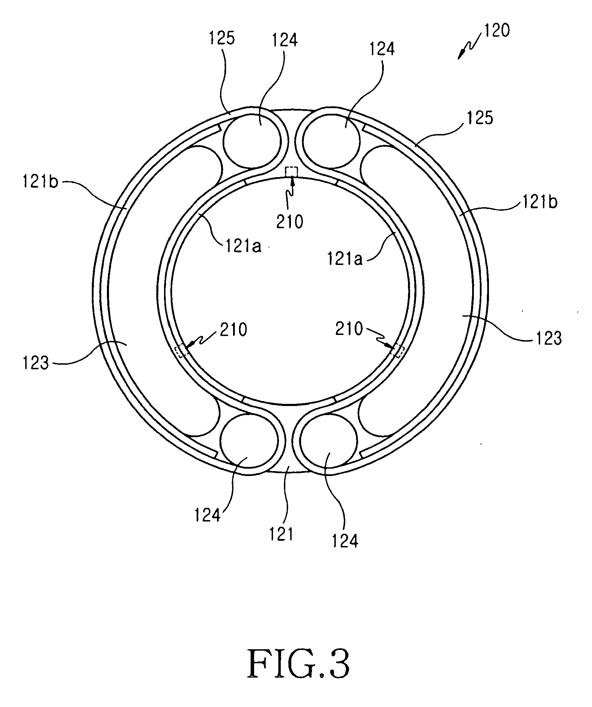

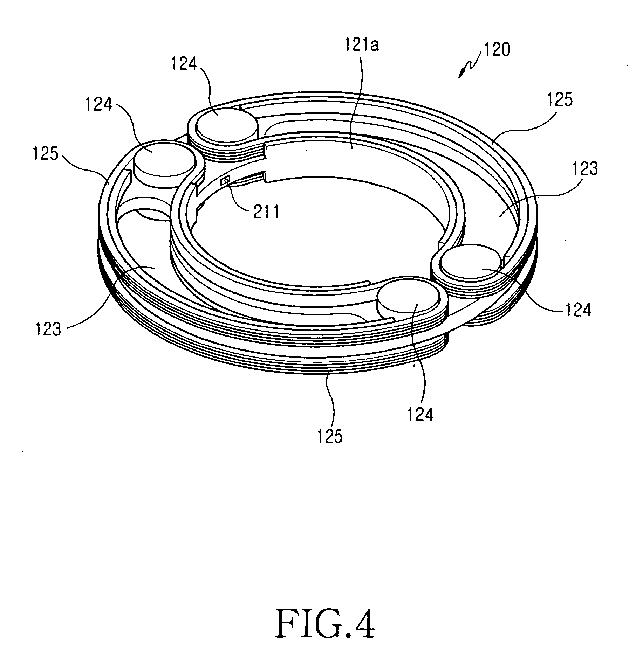

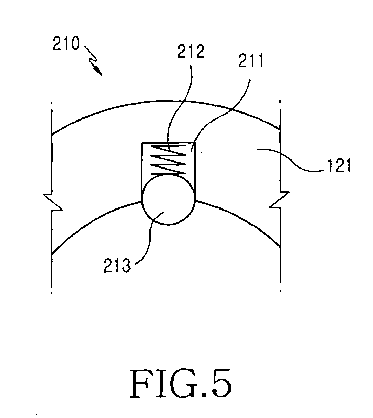

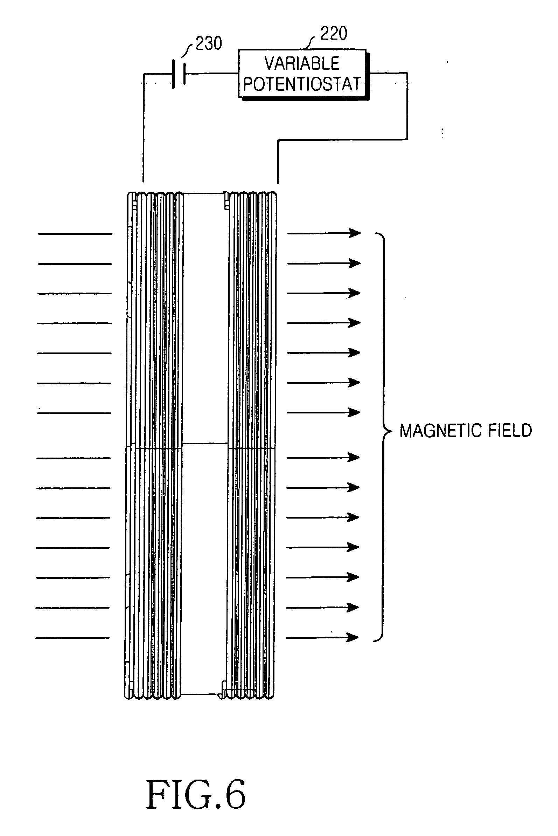

FIGs. 3 to 6 show the structure of the movement means 120 shown in FIG 1. Referring to FIGs. 3 to 6, the movement means 120 comprises a nonmagnetic body 121 having a hollow extending through the center thereof and a plurality of coil groups 125 surrounding the outer peripheral surface of the nonmagnetic body 121. The movement means is connected to a DC power 230 for supplying a direct current and to a variable potentiostat 220 for controlling the intensity and direction of the direct current.

The nonmagnetic body 121 comprises a plurality of C-grooves 123 extending along the movement axis around the hollow formed at the center thereof; a plurality of guide blades 121 a and 121b extending in a direction parallel to the movement axis along the periphery of the C-grooves 123; a plurality of protrusions 124 extending from the nonmagnetic body 121 in a direction parallel to the movement axis between the C-grooves 123; and a plurality of guide devices 210.

The guide devices 210 comprise a guide groove 211 formed on the inner peripheral surface of the nonmagnetic body 121, an elastic means 212 inserted into the guide groove 211, and a guide ball 213 inserted into the guide groove 211 to be forced against the outer peripheral surface of the lens housing 110 by an elastic force from the elastic means 212. The guide devices 210 cause the inner peripheral surface of the nonmagnetic body 121 to engage with the outer peripheral surface of the lens housing 110 and guide the lens housing 110 to move along the movement axis. At least three guide devices 210 are provided to fix the distance of the nonmagnetic body 121 relative to the outer peripheral surface of the lens housing 110. The guide devices 210 are spaced from one another with an interval of 120° or less.

Each coil group 125 surrounds the corresponding guide blades 121 a and 121b and the corresponding protrusions 124 and forms a magnetic field when a direct current is applied. The movement means 120 may be composed of a solenoid which is capable of adjusting the direction and strength of the magnetic field according to the polarity and intensity of the applied direct current.

The movement means 120 creates a magnetic field in a predetermined direction as a direct current is applied from the DC power 230. The direction and intensity of the created magnetic field can be adjusted by controlling the polarity and intensity of the direct current with the variable potentiostat 220.

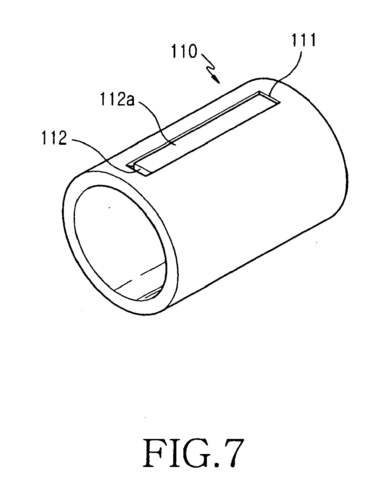

FIG 7 is a perspective view of the lens housing 110 shown in FIG 1. Referring to FIG 7, the cylindrical lens housing 110 has at least one groove 111 formed on the outer peripheral surface thereof, in which a corresponding third magnetic body 112 is seated. A surface 112a of the third magnetic body 112, which faces the inner peripheral surface of the first and second magnetic bodies 130 and 140, has the same polarity as that of the inner peripheral surface of the first and second magnetic bodies 130 and 140. In this way a repulsive force is created between the first and second magnetic bodies 130 and 140 and the third magnetic body 112 and the first and second magnetic bodies 130 and 140 maintain a spacing from the lens housing 110. The first groove 111 may take the form of a strip extending along the outer peripheral surface of the lens housing 110 in a direction parallel to the movement axis or a ring extending around the outer peripheral surface of the lens housing 110.

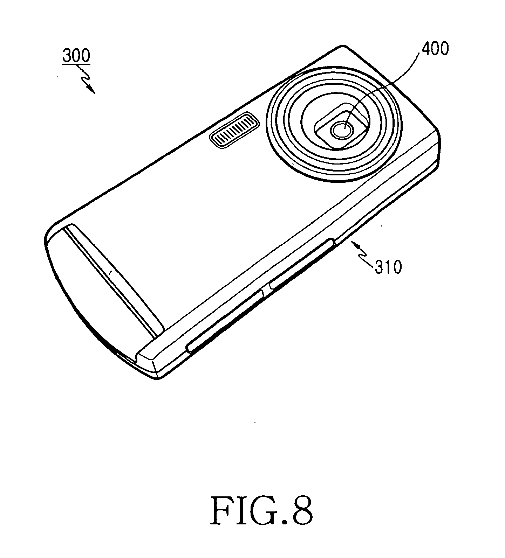

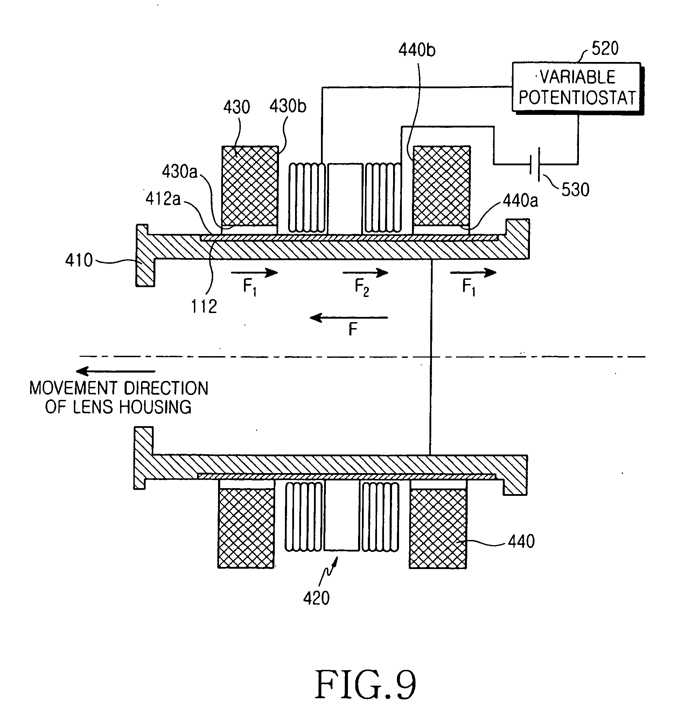

FIG 8 is a perspective view of a portable communication apparatus according to a second embodiment of the present invention. FIG 9 is a sectional view of an optical zoom apparatus shown in FIG 8. Referring to FIGs. 8 and 9, a portable communication apparatus 300 according to a second embodiment of the present invention comprises an optical zoom apparatus according to the first embodiment of the present invention and a body 310.

The optical zoom apparatus 400 comprises a lens housing 410 for retaining corresponding lens (not shown); a first magnetic body 430 positioned around the lens housing 410; a second magnetic body 440 positioned around the lens housing 410 along a movement axis while being spaced from the first magnetic body 430; and a movement means 420 positioned between the first and second magnetic bodies 430 and 440 while surrounding the lens housing 410 to create a movement force for moving the lens housing 410 back and forth along the movement axis as an electric current is applied.

The lens housing 410 is aligned in such a manner that its hollow coincides with the movement axis. The second magnetic body 440, the movement means 420, and the first magnetic body 430 are successively inserted into the outer peripheral surface of the lens housing 410. Surfaces 430b and 440b of the first and second magnetic bodies 430 and 440, which face each other, have the same polarity and create a repulsive force between them. A third magnetic body 412 is seated in a groove formed on the outer peripheral surface of the lens housing 410, facing the inner peripheral surface of the first and second magnetic bodies 130 and 140. A first surface 412a of the third magnetic body 412 has the same polarity as the inner peripheral surfaces 430a and 440a of the first and second magnetic bodies 430 and 440.

The inner peripheral surfaces 430a and 440a face the first surface 412a, so that a repulsive force is created between the first and second magnetic bodies 430 and 440 and the third magnetic body 412 and the first and second magnetic bodies 430 and 440 maintain a spacing from the lens housing 410. The movement means 420 has a guide device (not shown) formed on the inner peripheral surface of a nonmagnetic body 421 forced against the lens housing 410. Thus, a friction force $F_2$ is generated between the movement means 420 and the lens housing 410. Friction forces $F_1$ are also generated between the first and second magnetic bodies and the lens housing.

The movement means 420 creates a movement force F in a direction parallel to the movement axis, when a direct current is applied. This provides the lens housing 410 with the movement force F. The movement force F is controlled according to the direction of the direct current applied to the movement means 420. The movement force F is transmitted to the lens housing 410 from the movement means 420 due to the friction force $F_2$ between the lens housing 410 and the movement means 420.

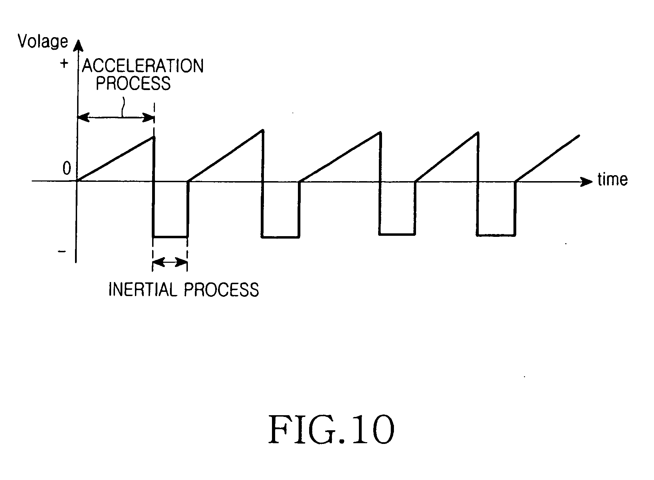

FIG 10 is a graph illustrating the operation of the optical zoom apparatus 400 shown in FIG 9. Referring to FIG 10, the operation of the optical zoom apparatus 400 may be classified into acceleration processes caused by the change of direct current applied to the movement means 420 and inertial processes.

In the acceleration process, the movement force created by the movement means 420 is gradually increased and is transmitted to the lens housing 410. The movement force is proportional to the change of intensity of the direct current applied to the movement means 420.

$$F_2 > F > 2F_1 \qquad \text{(Equation 1)}$$

The movement means 420 is slowly accelerated, if the movement force created by the movement means 420 is larger than the friction force $F_1$ between the first and second magnetic bodies 430 and 440 and the lens housing 410. The lens housing 410 is also accelerated by the movement means 420. A variable potentiostat 520 in combination with DC power 530 controls the intensity and polarity of the direct current applied to the movement means 420 as desired.

In the inertial processes, the operation of the movement means 420 to accelerate the lens housing 410 is instantly stopped. The friction force $F_2$ between the lens housing 410 and the movement means 420 then disappears. Further, the lens housing 410 tends to continuously move in the direction of the transmitted movement force under the action of a stationary inertial force.

If the direct current, which has been applied to the movement means 420, is abruptly interrupted, the movement means 420 ceases to transmit a movement force to the lens housing 410. The lens housing 410 is then subject to a stationary inertial force and tends to additionally move a predetermined distance.

$$2F_1 > F_B > \text{stationary inertial force} \qquad \text{(Equation 2)}$$

Equation 2 explains the frictional force relationship between the stationary inertial force and $F_1$. As the stationary movement means 420 is instantly moved $F_B$ in a direction opposite to the traveling direction, the lens housing 410 is subject to a movement force F due to stationary inertia to a larger degree.

If the movement means 420 is instantly moved $F_B$ in the opposite direction, the friction force $F_2$ between the movement means 420 and the lens housing 410 disappears and an instant slip occurs. In other words, the lens housing 410 is subject to a stationary inertial force to a larger degree, while the movement means 420 travels $F_B$ in a direction opposite to the traveling direction of the movement force. As such, the movement means 420 can travel either in the direction of the applied movement force F or in a direction opposite to the traveling direction of the movement force F depending on the direction of the applied direct current.

In summary, the movement means 420 plays the role of a vibrator as the direct current applied to the movement means 420 changes in the repeated acceleration and inertial processes. The vibration of the movement means 420 activates the stationary inertial force of the lens housing 410 and causes it to travel along the movement axis. The direction of vibration of the movement means 420 can be controlled by changing the polarity of the applied direct current.

As mentioned above, the optical zoom apparatus 400 comprising the movement means 420 according to the present invention uses the movement means 420 as a kind of solenoid vibrator by controlling the direct current applied to the movement means 420. If the direction of zoom operation is to be controlled, the direction of direct current in the acceleration process may be reversed.

Advantageously, the optical zoom apparatus according to the present invention can reduce noise and the product to which it is applied can be made in a slim size. Particularly, as the intensity and direction of direct current applied to the movement means is varied with a predetermined period, the movement means which is a type of solenoid is vibrated. Thus, the vibration is used to create a movement force of the lens housing. As lens housing is moved by an inertial force created by the vibration of the movement means, power consumption is minimized. Accordingly, the optical zoom apparatus can be applied to a portable communication apparatus having a slimmer size.

While the invention has been shown and described with reference to certain preferred embodiments thereof, it will be understood by those skilled in the art that various changes in form and details may be made therein without departing from the scope of the invention as defined by the appended claims.

**Claims**

1.   An optical zoom apparatus (100, 400) comprising:

   a plurality of lenses (111a, 111b, 111c, 161a, 161b);
   a lens housing (110, 410) for retaining a plurality of lenses (111a, 111b, 111c);
   a first magnetic body (130, 430) positioned near the lens housing (110, 410);
   a second magnetic body (140, 440) positioned near the lens housing (110, 410) while being spaced from the first magnetic body (130, 430) along a movement axis; and
   a movement means (120, 420) positioned between the first and second magnetic bodies (130, 140; 430, 440), wherein the first and second magnetic bodies (130, 140; 430, 440) may comprise permanent magnets or solenoids,
   **characterized in that**
   the movement means (120, 420) comprises a plurality of coil groups (125) to move the lens housing (110, 410) along the movement axis as an electric current is applied,
   the lens housing (110, 410) has a cylindrical shape with at least one first groove (111) formed on an outer peripheral surface, wherein a third magnetic body (112, 412) is positioned, and
   a surface (112a, 412a) of the third magnetic body (112, 412) facing an inner peripheral surface of the first and second magnetic bodies (130, 140; 430, 440) has the same polarity as the inner peripheral surface of the first and second magnetic bodies (130, 140; 430, 440).

2.   The optical zoom apparatus as claimed in claim 1, wherein the first and second magnetic bodies (130, 140; 430, 440) are positioned around the lens housing (110, 410).

3.   The optical zoom apparatus as claimed in claims 1 or 2, wherein the movement means (120, 420) surrounds the lens housing (110, 410).

4.   The optical zoom apparatus as claimed in any of claims 1 to 3, wherein the movement means (120, 420) moves the lens housing (110, 410) in a back and forth movement along the movement axis.

5.   The optical zoom apparatus as claimed in any of claims 1 to 4, wherein the first groove (111) is formed in a radial shape along the outer peripheral surface of the lens housing (110, 410) at a position corresponding to that of the first and second magnetic bodies (130, 140; 430, 440).

6.   The optical zoom apparatus as claimed in any of claims 1 to 4, wherein the first groove (111) is formed along the outer peripheral surface of the lens housing (110, 410) in a direction parallel to the movement axis.

7.   The optical zoom apparatus as claimed in any of claims 1 to 6, wherein the movement means (120, 420) has a radial shape with a hollow formed at the center, through which a long axis of the lens housing (110, 410) extends while coinciding with the movement axis.

8.   The optical zoom apparatus as claimed in claim 7, wherein the movement means (120, 420) includes a nonmagnetic body (121) and the plurality of coil groups (125) are around the nonmagnetic body (121).

9. The optical zoom apparatus as claimed in claim 8, wherein the movement means (120, 420) further includes a plurality of C-grooves (123) around the periphery of the hollow along the movement axis.

10. The optical zoom apparatus as claimed in claim 8 or 9, wherein the nonmagnetic body (121) comprises a plurality of guide devices (210) formed on the inner peripheral surface thereof while being engaged with the outer peripheral surface of the lens housing (110, 410) to guide the lens housing (110, 410) to move along the movement axis.

11. The optical zoom apparatus as claimed in claim 10, wherein each guide device (210) comprises:

a guide groove (211) formed on the inner peripheral surface of the nonmagnetic body (121);
an elastic means (212) inserted into the guide groove (211); and
a guide ball (213) inserted into the guide groove (211) in such a manner that a portion thereof contacts the outer periphery of the lens housing (110, 410), forced against the outer peripheral surface of the lens housing (110, 410) by an elastic force from the elastic means (212).

12. The optical zoom apparatus as claimed in any of claims 9 to 11, wherein the nonmagnetic body (121) comprises a plurality of guide blades (121a, 121b) extending along the periphery of the C-grooves (123) in a direction perpendicular to the movement axis and each coil group (125) surrounds the periphery of the corresponding guide blade (121a, 121b).

13. The optical zoom apparatus as claimed in any of claims 1 to 12, wherein a surface of the third magnetic body (112, 412) has the same polarity as that of surfaces of the first and second magnetic bodies (130, 140; 430, 440), which face the surface (112a, 412a) of the third magnetic body (112, 412), and the first and second magnetic bodies (130, 140; 430, 440) maintain a spacing from the lens housing (110, 410) by means of the third magnetic body (112, 412).

14. The optical zoom apparatus as claimed in any of claims 1 to 13, wherein surfaces of the first and second magnetic bodies (130, 140; 430, 440) facing each other have the same polarity and the first and second magnetic bodies (130, 140; 430, 440) have a radial structure with a hollow formed at the center thereof along the movement axis.

15. The optical zoom apparatus as claimed in any of claims 1 to 14, wherein said optical zoom apparatus (100, 400) further comprises an external housing (150) having a cylindrical shape with a hollow extending through the center thereof along the movement axis, wherein the plurality of lenses (111a, 111b, 111c, 161a, 161b), lens housing (110, 410), first and second magnetic body (130, 140; 430, 440) and movement means (120, 420) are mounted in the hollow, and the first and second magnetic bodies (130, 140; 430, 440) are supported on the inner peripheral surface of the external housing (150).

16. A portable communication apparatus (300) comprising:

an optical zoom apparatus as claimed in any of claims 1 to 15.

17. The portable communication apparatus as claimed in claim 16, wherein the movement means (420) comprises:

a DC power source (530) to provide the movement means (420) with a direct current and
a variable potentiostat (520) to control the intensity and direction of the direct current provided to the movement means (420).

18. The portable communication apparatus as claimed in claim 16 or 17, wherein the movement means (420) comprises a solenoid.

**Patentansprüche**

1. Optische Zoom-Vorrichtung (100, 400), die umfasst:

eine Vielzahl von Linsen (111a, 111b, 111c, 161a, 161b);
ein Linsengehäuse (110, 410) zum Halten einer Vielzahl von Linsen (111a, 111b, 111c);
einen ersten magnetischen Körper (130, 430), der in der Nähe des Linsengehäuses (110, 410) positioniert ist;
einen zweiten magnetischen Körper (140, 440), der in der Nähe des Linsengehäuses (110, 410) positioniert und gleichzeitig von dem ersten magnetischen Körper (130, 430) entlang einer Bewegungsachse beabstandet ist; und

eine Bewegungseinrichtung (120, 420), die zwischen dem ersten und dem zweiten magnetischen Körper (130, 140; 430, 440) positioniert ist,

wobei der erste und der zweite magnetische Körper (130, 140; 430, 440) Permanentmagneten oder Elektromagneten umfassen können,

**dadurch gekennzeichnet, dass**

die Bewegungseinrichtung (120, 420) eine Vielzahl von Wicklungsgruppen (125) umfasst, die das Linsengehäuse (110, 410) entlang der Bewegungsachse bewegen, wenn ein elektrischer Strom angelegt wird,

das Linsengehäuse (110, 410) eine zylindrische Form mit wenigstens einer ersten Nut (111) hat, die an einer Außenumfangsfläche ausgebildet ist, und in der ein dritter magnetischer Körper (112, 412) positioniert ist, und eine Fläche (112a, 412a) des dritten magnetischen Körpers (112, 412), die einer Innenumfangsfläche des ersten und des zweiten magnetischen Körpers (130, 140; 430, 440) zugewandt ist, die gleiche Polarität hat wie die Innenumfangsfläche des ersten und des zweiten magnetischen Körpers (130, 140; 430, 440).

2. Optische Zoom-Vorrichtung nach Anspruch 1, wobei der erste und der zweite magnetische Körper (130, 140; 430, 440) um das Linsengehäuse (110, 410) herum positioniert sind.

3. Optische Zoom-Vorrichtung nach den Ansprüche 1 oder 2, wobei die Bewegungseinrichtung (120, 420) das Linsengehäuse (110, 410) umgibt.

4. Optische Zoom-Vorrichtung nach einem der Ansprüche 1 bis 3, wobei die Bewegungseinrichtung (120, 420) das Linsengehäuse (110, 410) in einer Hin- und Herbewegung entlang der Bewegungsachse bewegt.

5. Optische Zoom-Vorrichtung nach einem der Ansprüche 1 bis 4, wobei die erste Nut (111) in einer radialen Form entlang der Außenumfangsfläche des Linsengehäuses (110, 410) an einer Position ausgebildet ist, die der des ersten und des zweiten magnetischen Körpers (130, 140; 430, 440) entspricht.

6. Optische Zoom-Vorrichtung nach einem der Ansprüche 1 bis 4, wobei die erste Nut (111) entlang der Außenumfangsfläche des Linsengehäuses (110, 410) in einer Richtung parallel zu der Bewegungsachse ausgebildet ist.

7. Optische Zoom-Vorrichtung nach einem der Ansprüche 1 bis 6, wobei die Bewegungseinrichtung (120, 420) eine radiale Form mit einem in der Mitte ausgebildeten Hohlraum hat, durch den eine Längsachse des Linsengehäuses (110, 410) verläuft und dabei mit der Bewegungsachse zusammenfällt.

8. Optische Zoom-Vorrichtung nach Anspruch 7, wobei die Bewegungseinrichtung (120, 420) einen nicht magnetischen Körper (121) enthält und die Vielzahl von Wicklungsgruppen (125) sich um den nicht magnetischen Körper (121) herum befinden.

9. Optische Zoom-Vorrichtung nach Anspruch 8, wobei die Bewegungseinrichtung (120, 420) des Weiteren eine Vielzahl von C-Nuten (123) um den Umfang des Hohlraums herum entlang der Bewegungsachse enthält.

10. Optische Zoom-Vorrichtung nach Anspruch 8 oder 9, wobei der nicht magnetische Körper (121) eine Vielzahl von Führungsvorrichtungen (210) umfasst, die an der Innenumfangsfläche desselben ausgebildet sind und dabei mit der Außenumfangsfläche des Linsengehäuses (110, 410) in Eingriff sind, um das Linsengehäuse (110, 410) so zu führen, dass es sich entlang der Bewegungsachse bewegt.

11. Optische Zoom-Vorrichtung nach Anspruch 10, wobei jede Führungsvorrichtung (210) umfasst:

eine Führungsnut (211), die an der Innenumfangsfläche des nicht magnetischen Körpers (121) ausgebildet ist;
eine elastische Einrichtung (212), die in die Führungsnut (211) eingeführt ist; und
eine Führungskugel (213), die in die Führungsnut (211) so eingeführt ist, dass ein Abschnitt derselben mit dem Außenumfang des Linsengehäuses (110, 410) in Kontakt kommt und durch eine elastische Kraft von der elastischen Einrichtung (212) an die Außenumfangsfläche des Linsengehäuses (110, 410) gedrückt wird.

12. Optische Zoom-Vorrichtung nach einem der Ansprüche 9 bis 11, wobei der nicht magnetische Körper (121) eine Vielzahl von Führungsflügeln (121a, 121b) umfasst, die sich entlang des Umfangs der C-Nuten (123) in einer Richtung senkrecht zu der Bewegungsachse erstrecken, und jede Wicklungsgruppe (125) den Umfang des entsprechenden Führungsflügels (121a, 121b) umgibt.

**13.** Optische Zoom-Vorrichtung nach einem der Ansprüche 1 bis 12, wobei eine Oberfläche des dritten magnetischen Körpers (112, 412) die gleiche Polarität hat wie die von Flächen des ersten und des zweiten magnetischen Körpers (130, 140; 430, 440), die der Oberfläche (112a, 412a) des dritten magnetischen Körpers (112, 412) zugewandt sind, und der erste sowie der zweite magnetische Körper (130, 140; 430, 440) einen Abstand zu dem Linsengehäuse (110, 410) mittels des dritten magnetischen Körpers (112, 412) beibehalten.

**14.** Optische Zoom-Vorrichtung nach einem der Ansprüche 1 bis 13, wobei Flächen des ersten und des zweiten magnetischen Körpers (130, 140; 430, 440), die einander zugewandt sind, die gleiche Polarität haben und der erste sowie der zweite magnetische Körper (130, 140; 430, 440) eine radiale Struktur mit einem in der Mitte derselben entlang der Bewegungsachse ausgebildeten Hohlraum haben.

**15.** Optische Zoom-Vorrichtung nach einem der Ansprüche 1 bis 14, wobei die optische Zoom-Vorrichtung (100, 400) des Weiteren ein äußeres Gehäuse (150) umfasst, das eine zylindrische Form mit einem durch die Mitte desselben entlang der Bewegungsachse verlaufenden Hohlraum umfasst und die Vielzahl der Linsen (111a, 111b, 111c, 161a, 162b), das Linsengehäuse (110, 410), der erste sowie der zweite magnetische Körper (130, 140; 430, 440) und die Bewegungseinrichtung (120, 420) in dem Hohlraum angebracht sind und der erste sowie der zweite magnetische Körper (130, 140; 430, 440) an der Innenumfangsfläche des äußeren Gehäuses (150) gelagert sind.

**16.** Tragbare Kommunikationsvorrichtung (300), die umfasst:

eine optische Zoom-Vorrichtung nach einem der Ansprüche 1 bis 15.

**17.** Tragbare Kommunikationsvorrichtung nach Anspruch 16, wobei die Bewegungseinrichtung (420) umfasst:

eine Gleichstromquelle (530), die die Bewegungseinrichtung (420) mit einem Gleichstrom versorgt, und einen variablen Potentiostat (520), der die Intensität und Richtung des Gleichstroms steuert, der der Bewegungseinrichtung (420) bereitgestellt wird.

**18.** Tragbare Kommunikationsvorrichtung nach Anspruch 16 oder 17, wobei die Bewegungseinrichtung (420) einen Elektromagneten umfasst.

**Revendications**

**1.** Dispositif (100, 400) de zoom optique comprenant:

une pluralité de lentilles (111a, 111b, 111c, 161a, 161b);
un logement (110, 410) de lentilles destiné à contenir une pluralité de lentilles (111a, 111b, 111c);
un premier corps magnétique (130, 430) placé près du logement (110, 410) de lentilles ;
un deuxième corps magnétique (140, 440) placé près du logement (110, 410) de lentilles tout en étant espacé du premier corps magnétique (130, 430) le long d'un axe de déplacement ; et
un moyen (120, 420) de déplacement placé entre les premier et deuxième corps magnétiques (130, 140; 430, 440) ;
dans lequel les premier et deuxième corps magnétiques (130, 140 ; 430, 440) peuvent comprendre des aimants permanents ou des solénoïdes;

**caractérisé:**

**en ce que** le moyen (120, 420) de déplacement comprend une pluralité de groupes (125) de bobines pour déplacer le logement (110, 410) de lentilles le long de l'axe de déplacement lorsqu'un courant électrique est appliqué ;
**en ce que** le logement (110, 410) de lentilles a une forme cylindrique avec au moins une première rainure (111) formée sur une surface périphérique extérieure, dans laquelle est placé un troisième corps magnétique (112, 412) ; et
**en ce qu'**une surface (112a, 412a) du troisième corps magnétique (112, 412) faisant face à une surface périphérique intérieure des premier et deuxième corps magnétiques (130, 140 ; 430, 440) a la même polarité que la surface périphérique intérieure des premier et deuxième corps magnétiques (130, 140 ; 430, 440).

2. Dispositif de zoom optique selon la revendication 1, dans lequel les premier et second corps magnétiques (130, 140 ; 430, 440) sont placés autour du logement (110, 410) de lentilles.

3. Dispositif de zoom optique selon la revendication 1 ou 2, dans lequel le moyen (120, 420) de déplacement entoure le logement (110, 410) de lentilles.

4. Dispositif de zoom optique selon l'une quelconque des revendications 1 à 3, dans lequel le moyen (120, 420) de déplacement déplace le logement (110, 410) de lentilles en un mouvement de va-et-vient le long de l'axe de déplacement.

5. Dispositif de zoom optique selon l'une quelconque des revendications 1 à 4, dans lequel la première rainure (111) est formée en une forme radiale le long de la surface périphérique extérieure du logement (110, 410) de lentilles à une position correspondant à celle des premier et deuxième corps magnétiques (130, 140 ; 430, 440).

6. Dispositif de zoom optique selon l'une quelconque des revendications 1 à 4, dans lequel la première rainure (111) est formée le long de la surface périphérique extérieure du logement (110, 410) de lentilles dans une direction parallèle à l'axe de déplacement.

7. Dispositif de zoom optique selon l'une quelconque des revendications 1 à 6, dans lequel le moyen (120, 420) de déplacement a une forme radiale avec un évidement formé au centre à travers lequel s'étend l'axe longitudinal du logement (110, 410) de lentilles tout en coïncidant avec l'axe de déplacement.

8. Dispositif de zoom optique selon la revendication 7, dans lequel le moyen (120, 420) de déplacement comprend un corps non magnétique (121) et dans lequel la pluralité de groupes (125) de bobines se trouve autour du corps non magnétique (121).

9. Dispositif de zoom optique selon la revendication 8, dans lequel le moyen (120, 420) de déplacement comprend en outre une pluralité de rainures (123) en C autour de la périphérie de l'évidement le long de l'axe de déplacement.

10. Dispositif de zoom optique selon la revendication 8 ou 9, dans lequel le corps non magnétique (121) comprend une pluralité de dispositifs (210) de guidage formée sur sa surface périphérique intérieure tout en étant en prise avec la surface périphérique extérieure du logement (110, 410) de lentilles pour guider le logement (110, 410) de lentilles pour déplacement le long de l'axe de déplacement.

11. Dispositif de zoom optique selon la revendication 10, dans lequel chaque dispositif (210) de guidage comprend:

une rainure (211) de guidage formée sur la surface périphérique intérieure du corps non magnétique (121) ;
un moyen élastique (212) inséré dans la rainure (211) de guidage ; et
une bille (213) de guidage insérée dans la rainure (211) de guidage de manière qu'une partie de celle-ci contacte la périphérie extérieure du logement (110, 410), forcée contre la surface périphérique extérieure du logement (110, 410) de lentilles par une force élastique provenant du moyen élastique (212).

12. Dispositif de zoom optique selon l'une quelconque des revendications 9 à 11, dans lequel le corps non magnétique (121) comprend une pluralité de lames (121a, 121b) de guidage s'étendant le long de la périphérie des rainures (123) en C dans une direction perpendiculaire à l'axe de déplacement et dans lequel chaque groupe (125) de bobines entoure la périphérie de la lame correspondante (121a, 121b) de guidage.

13. Dispositif de zoom optique selon l'une quelconque des revendications 1 à 12, dans lequel une surface du troisième corps magnétique (112, 412) a la même polarité que celle de surfaces des premier et deuxième corps magnétiques (130, 140; 430, 440), qui font face à la surface (112a, 412a) du troisième corps magnétique (112, 412), et dans lequel les premier et deuxième corps magnétiques (130, 140 ; 430, 440) maintiennent un écartement par rapport au logement (110, 410) de lentilles au moyen du troisième corps magnétique (112, 412).

14. Dispositif de zoom optique selon l'une quelconque des revendications 1 à 13, dans lequel des surfaces des premier et deuxième corps magnétiques (130, 140 ; 430, 440) se faisant face l'un l'autre ont la même polarité et dans lequel les premier et deuxième corps magnétiques (130, 140 ; 430, 440) ont une structure radiale avec un évidement formé en son centre le long de l'axe de déplacement.

15. Dispositif de zoom optique selon l'une quelconque des revendications 1 à 14, dans lequel ledit dispositif (100, 400) de zoom optique comprend en outre un logement externe (150) ayant une forme cylindrique avec un évidement s'étendant à travers son centre le long de l'axe de déplacement, dans lequel la pluralité de lentilles (111a, 111b, 111c, 161a, 161b), le logement (110, 410) de lentilles, les premier et deuxième corps magnétiques (130, 140 ; 430, 440) et le moyen (120, 420) de déplacement sont montés dans l'évidement, et dans lequel les premier et deuxième corps magnétiques (130, 140 ; 430, 440) sont supportés sur la surface périphérique intérieure du logement externe (150).

16. Appareil portatif (300) de communication comprenant:

un dispositif de zoom optique selon l'une quelconque des revendications 1 à 15.

17. Appareil portatif de communication selon la revendication 16, dans lequel le moyen (420) de déplacement comprend :

une source (530) de courant continu pour fournir au moyen (420) de déplacement un courant continu ; et
un potentiostat variable (520) pour commander l'intensité et le sens du courant continu fourni au moyen (420) de déplacement.

18. Appareil portatif de communication selon la revendication 16 ou 17, dans lequel le moyen (420) de déplacement comprend un solénoïde.

FIG.1

FIG.2

FIG.3

FIG.4

FIG.5

FIG.6

FIG.7

FIG.8

**FIG.9**

FIG.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200466293
- US 6762888 B, Ohima
- JP 2003098443 A
- JP 4050907 A
- JP 59198409 A
- JP 63163311 A
- JP 2003207708 A